# EUROPEAN PATENT APPLICATION

(11) **EP 1 449 812 A1**
(43) Date of publication of application: **25.08.2004**
(21) Application number: 04100642.0
(22) Date of filing: 18.02.2004
(51) Int. Cl.: C02F 1/40, B01D 21/02, C02F 3/12, B01D 21/00, C02F 1/00

(54) **Wastewater treatment arrangement and wastewater well**

(30) Priority: 21.02.2003 FI 20030262
(71) Applicant: Uponor Innovation AB, 513 81 Fristad (SE)
(72) Inventor: Lindblom, Magnus, 51335, Fristad (SE); Tast, Niila, 15270, Kukkila (FI)
(74) Representative: Huhtanen, Ossi Jaakko

(57) **Abstract**

Wastewater is treated in a wastewater well, for instance a depositing tank (1) comprising at least two chambers (2, 3, 4), through which the wastewater flows. The wastewater flows from said chambers (2, 3, 4) to a well chamber (5). From the well chamber (5), the fluid therein can be pumped out with a pump (6). The uppermost part of the well chamber (5) is arranged narrower than its lower part.

## Description

### BACKGROUND OF THE INVENTION

The invention relates to a wastewater treatment arrangement comprising a depositing tank having at least two chambers, through which wastewater flows, and a well chamber, to which the wastewater flows after the aforementioned chambers, and in connection of which well chamber is arranged a pump for emptying the well chamber, the well chamber being arranged inside the depositing tank.

The invention further relates to a wastewater well comprising at least two chambers, through which wastewater flows, and a well chamber, to which the wastewater flows after the aforementioned chambers, the well chamber being arranged inside the wastewater well.

Wastewaters may be treated in a depositing tank, for example. The depositing tank comprises different chambers, through which the wastewater flows. There are typically three chambers. The chambers may be arranged in one depositing tank by means of partition walls, or one tank may constitute one chamber, the required number of tanks being arranged in succession. In the chambers of the depositing tank, the water flows slowly, the solid particles in the water falling gravitationally onto the bottom of the chamber and the constituents lighter than water rising to the surface. The middle of the partition wall between the chambers is provided with holes or connecting pipes are arranged from one chamber to another, through which the clarified water in the middle of the chamber flows into the next chamber. When the wastewater has passed the last chamber, at least the majority of the solid matter therein has been deposited onto the bottom of the chambers, and the majority of the constituents lighter than water onto the surface of the water.

After the last chamber, the water, cleaned of solid matter, is led to further processing. The further processing may be for instance chemical and/or biological purification or the water could be led for cleaning to a filter field or to a sand filter. The chambers of the depositing tank are emptied of the solid matter deposited on the bottom thereof. The emptying takes place once or twice a year, for example.

Sometimes further processing has to be carried out at a site that is higher than the last chamber in the depositing tank. Such a situation arises for instance when the filter field has to be placed higher than the depositing tank. The immediate surroundings of the depositing tank may also be for instance so stony or rocky, so that the filter field has to be placed quite far from the depositing tank, the water having to be transferred to the filter field by pumping to secure the operation. This is typically arranged by letting the water flow gravitationally from the last chamber of the depositing tank to a pump well. A pump is arranged in the pump well for pumping the water for further processing.

The volume of the pump well has to be sufficient in order to ensure that a sufficiently large amount of water is pumped out. The amount of water pumped has to be sufficiently large such that for instance when filtering pipes are used, sufficiently water can be pumped therein in order for the water to be removed from the filtering pipes along their entire length, and not only from the first part, which would be the case if only small amounts of water were pumped into the filtering pipes. This would lead to excessive loading of the first part of the filter field, and its end part could not be utilized fully. The installation of a separate pump well naturally causes material and installation costs. In addition, a separate pump well adds the number of manholes, which typically are undesirable on a lawn, for example. A solution has indeed been presented, wherein the pump well is placed inside the depositing tank. However, it is extremely difficult to fit a sufficiently large pump well inside a depositing tank. If the pump well is too broad, the chambers of the depositing tank cannot be serviced through one manhole. On the other hand, it is difficult to make a pump well deep, because this also increases the total depth of the depositing tank and, consequently, the installation depth. An increased installation depth again causes costs during the installation of the tank. For example, digging the installation hole is thus quite laborious and expensive. Furthermore, the terrain could be such that, in practice, digging a deep pit is impractical for instance because of the height of the groundwater.

### BRIEF DESCRIPTION OF THE INVENTION

The object of the present invention is to provide a new and improved wastewater treatment arrangement and wastewater well.

The wastewater treatment arrangement of the invention is characterized in that the uppermost part of the well chamber is narrower than the lower part.

Furthermore, the wastewater well of the invention is characterized in that the uppermost part of the well chamber is narrower than the lower part.

The essential idea of the invention is to treat wastewater in a tank having at least two separate chambers. Furthermore, a well chamber whose uppermost part is narrower than its lower part is arranged inside the tank in addition to the aforementioned chambers. This enables the integration of a well chamber inside the tank, the volume of the well chamber being optimal, i.e. as large a well chamber as possible can be arranged inside the tank without the total height of the tank becoming too high and, in addition, the other chambers of the tank can be arranged sufficient large.

The essential idea of an embodiment is that the tank comprises one manhole through which all its chambers can be serviced. The lower part of the well chamber is preferably provided with a projection in a given direction or projections in given directions. Particularly preferably, the projecting parts are dimensioned and formed such that the bottom of each chamber can be reached through said manhole. Overall, the size and shape of the well chamber are rendered optimal, the maintenance and use of the tank being easy. For example, the opening above the well chamber, through which servicing takes place, is rendered extremely large. Likewise, the space obtained for the movement of the float element of the swimmer switch of the pump of the well chamber becomes advantageous and sufficient.

### BRIEF DESCRIPTION OF THE FIGURES

In the following, the invention will be described in detail in the accompanying drawings, in which
Figure 1 is a diagram of a wastewater treatment arrangement,
Figure 2 is a schematic sectional top view of a depositing tank,
Figure 3 is a schematic side view of the depositing tank of Figure 2 taken in section at line A - A of Figure 2, and
Figure 4 is a schematic top view of the depositing tank of Figure 2.

### DETAILED DESCRIPTION OF THE INVENTION

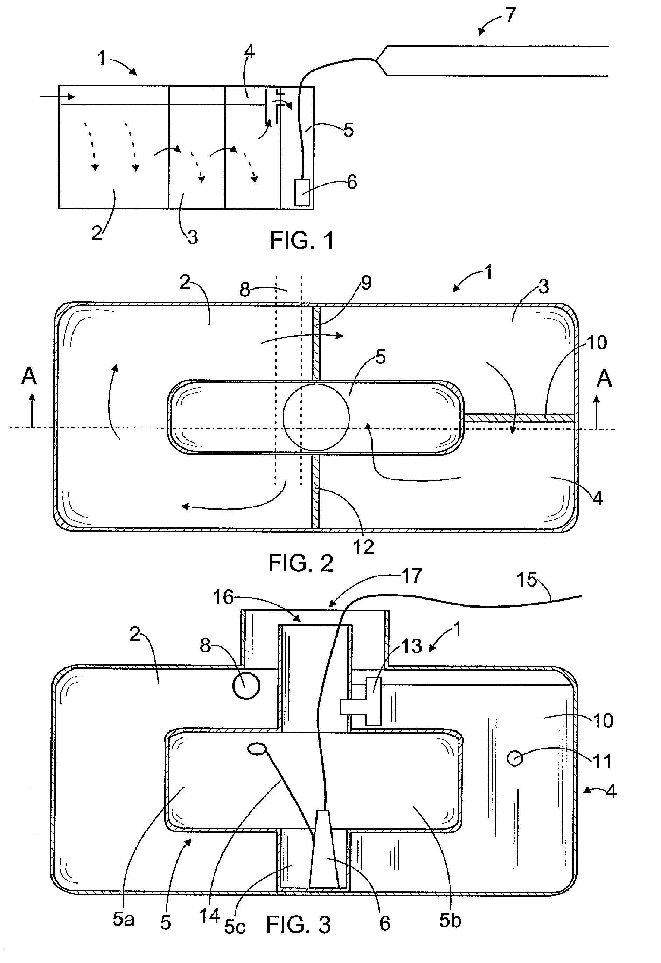

Figure 1 shows a wastewater treatment arrangement. In the wastewater treatment arrangement, wastewater is led to a depositing tank 1. The depositing tank 1 comprises a first chamber 2, a second chamber 3, and a third chamber 4. Typically, the volume of the first chamber 2 is larger than that of the second chamber 3 and the third chamber 4. Typically, the volumes of the second chamber 3 and the third chamber 4 are equal and their combined volume is approximately equal to the volume of the first chamber 2.

Wastewater is led along an inlet pipe to the first chamber 2. In the first chamber 2, the solid impurities in the wastewater gravitationally fall to the bottom of the first chamber 2, illustrated by arrows drawn in dashed lines in Figure 1. The constituents lighter than water rise to the surface. The partly clarified water flows from the first chamber 2 to the second chamber 3, wherein the wastewater is further clarified. The operation is similar also in the third chamber 4, from where the water gravitationally flows further to a well chamber 5. If need be, the deposited precipitate in the chambers 2, 3 and 4 is removed from the chambers of the depositing tank 1. Typically, depositing tanks are dimensioned in a manner requiring emptying once or twice yearly, for example.

The clarified wastewater is pumped from the well chamber 5 with a pump 6 to a filter field 7. In the filter field 7, the wastewater can be infiltrated into the soil or it may be led through a filtering layer, then being gathered in a collecting pipe and led through a collecting well to a ditch, for example. The pump 6 is provided with a swimmer switch for starting the pump once the well chamber 5 contains sufficiently water, the pump 6 emptying the well chamber 5 typically until it is almost empty. If the total volume of the well chamber 5 is sufficiently large, then the amount of water pumped during one pumping is sufficient for the full-power utilization of the filtering pipes of the filter field.

Figure 2 is a schematic sectional top view of a depositing tank 1. The depositing tank according to Figure 2 can be used when implementing the wastewater treatment arrangement shown in Figure 1.

Wastewater is led to a first chamber 2 in the depositing tank 1 along an inlet pipe 8 denoted by a dashed line in Figure 2. In Figure 2, the inlet pipe 8 is denoted by a dashed line since it is located above the point of the cross-section. The wastewater flows in the depositing tank 1 in the manner illustrated by arrows. The depositing tank 1 comprises a first chamber 2, from where water flows to a second chamber 3. Between the first chamber 2 and the second chamber 3 is a partition wall 9. The partition wall 9 is provided with an opening or openings, allowing the water to flow from the first chamber 2 to the second chamber 3 through the opening in the partition wall 9. From the second chamber 3, the water flows to a third chamber 4. Between the second chamber 3 and the third chamber 4 is also a partition wall 10. The partition wall 10 is also provided with an opening 11 or openings, allowing the water to flow from the second chamber 3 to the third chamber 4 through the opening 11 in the partition wall 10. Figure 3 shows said opening 11. Between the third chamber 4 and the first chamber 2 is a partition wall 12, which is without openings. Accordingly, water is led to flow from the third chamber 4 to a well chamber 5. Between the third chamber 4 and the well chamber 5 is arranged a T-piece fitting 13, through which the water is allowed to flow into the well chamber 5.

The well chamber 5 comprises an immersion pump 6 equipped with a swimmer switch 14. When sufficiently water enters the well chamber 5, a float element in the swimmer switch 14 rises upwards and starts the pump 6. This way the pump 6 pumps the water out along an outlet pipe 15. When the float element of the swimmer switch 14 sinks downward as the water level drops, it stops the operation of the pump 6 once it has descended sufficiently low.

The well chamber 5 is arranged in the middle of the depositing tank 1, whereby it is surrounded on all sides by one of the chambers 2, 3 or 4. The well chamber 5 is supported to the middle of the depositing tank 1 with the partition walls 9, 10 and 12. A manhole 16 in the upper part of the well chamber 5 is arranged in the depositing tank 1 in the middle of a manhole 17. The manholes 16 and 17 are provided with covers, but, for the sake of clarity, the covers are not shown in the accompanying drawings. No cover is necessarily at all needed on top of the manhole 16 of the well chamber.

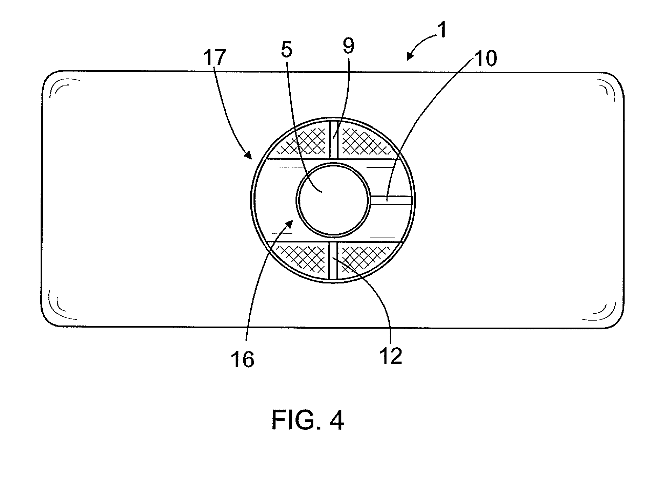

Protrusions, or side projections 5a and 5b, are provided in the middle of the well chamber 5, which side projections 5a and 5b extend to the chambers 2, 3 or 4. When the well chamber 5 is provided with at least one side projection, the volume of the well chamber 5 can be easily optimized. In other words, the side projection means that the well chamber 5 is provided with a shape diverging outward from the level of the rest of the normal wall line of the chamber. As Figure 4 shows, the side projections 5a and 5b are shaped such that the chambers 2, 3 and 4 are serviceable from the manhole 17. For example, the end of an emptying hose can be easily dropped through the manhole 17 directly downward to the bottom of the chambers 2, 3 and 4. Said route usable in service, and the bottom of the chambers 2, 3 and 4, seen from the manhole 17, are denoted by a cross lineation in Figure 4.

Since the side projections 5a and 5b are provided in the middle of the well chamber 5, a lower recess 5c forms in the well chamber 5. The pump 6 is easily placed steadily in the lower recess 5c. On the other hand, the side projections 5a and 5b in the middle part make it easy to arrange a free and sufficient movement area for the float element of the swimmer switch 14.

The total volume of the depositing tank 1 is between 1,000 and 4,000 litres, for example. The volume of the well chamber 5 is preferably large enough to enable the emptying of at least 150 litres during one pumping. Accordingly, the total volume of the well chamber 5 is 200 litres, for example. If, in that case, the total volume of the depositing tank 1 is 2,200 litres, the volumes of the different chambers 2, 3 and 4 can be arranged such that the volume of the first chamber 2 is about 1,000 litres, the volume of the second chamber 3 and the third chamber 4 being about 500 litres. The depositing tank 1 is preferably made from plastic, such as polyethylene PE, polypropylene PP or crosslinked polyethylene PEX.

The drawings and the related description are only intended to illustrate the inventive idea. The details of the invention may vary within the scope of the claims. Accordingly, the chambers 2, 3 and 4 may be other than depositing chambers. Said chambers can be used for instance in chemical purification of wastewater. Furthermore, instead of gravitational flow, the fluid can be pumped from one chamber to another. The fluid does not necessarily have to be pumped from the well chamber 5 with an immersion pump as shown in the figures, but for instance such an arrangement can be used wherein only a pipe and a sensor are arranged inside the well chamber 5, the sensor monitoring the height of the fluid level in the well chamber. This being the case, the sensor can communicate to a pump outside the well chamber and the depositing tank when it should start to empty the well chamber 5. After the well chamber 5, the fluid does not necessarily have to be led for further processing to a filter field. For example, the fluid can be pumped into a container. On the other hand, the further processing may also involve chemical purification. Still further, if the fluid is sufficiently clean, it can be removed from the well chamber 5 without any further processing. In the case shown in the figures, the depositing tank is elongated and the well chamber is provided with side projections 5a and 5b in two different directions. If the depositing tank 1 is arranged round, the well chamber 5 may comprise side projections in four directions, for example, whereby it thus resembles a plus sign when viewed from above. Furthermore, the side projection may be arranged in only one direction, whereby the well chamber 5 only has one side projection or the side projection may be arranged to provide a ring around the well chamber, whereby only one side projection can be considered to exist, but in this case it can be considered to be arranged in all directions.

## Claims

1. A wastewater treatment arrangement comprising a depositing tank (1) having at least two chambers (2, 3, 4), through which wastewater flows, and a well chamber (5), to which the wastewater flows after the chambers (2, 3, 4), and in connection of which well chamber (5) is arranged a pump (6) for emptying the well chamber (5), the well chamber (5) being arranged inside the depositing tank (1), **characterized in that** the uppermost part of the well chamber (5) is narrower than the lower part.

2. A wastewater treatment arrangement as claimed in claim 1, **characterized in that** the well chamber (5) is arranged in the middle of the depositing tank (1).

3. A wastewater treatment arrangement as claimed in claim 1 or 2, **characterized in that** the depositing tank (1) only comprises one manhole (17), through which all the chambers (2, 3, 4, 5) of the depositing tank are serviceable.

4. A wastewater treatment arrangement as claimed in any one of the preceding claims, **characterized in that** the lower part of the well chamber (5) is arranged to comprise side projections (5a, 5b).

5. A wastewater treatment arrangement as claimed in claim 4, **characterized in that** the side projections (5a, 5b) are dimensioned and arranged such that the bottom of each chamber (2, 3, 4, 5) is reachable substantially rectilinearly from said manhole (17).

6. A wastewater treatment arrangement as claimed in claim 4 or 5, **characterized in that** the side projections (5a, 5b) are arranged in the middle of the well chamber (5) and a lower recess (5c) is arranged in the lower part of the well chamber (5).

7. A wastewater treatment arrangement as claimed in claim 6, **characterized in that** the pump (6) is arranged in the lower recess (5c).

8. A wastewater treatment arrangement as claimed in any one of the preceding claims, **characterized in that** the wastewater treatment arrangement comprises a filter field (7), whereto the fluid from the well chamber (5) is pumped.

9. A wastewater well comprising at least two chambers (2, 3, 4), through which wastewater flows, and a well chamber (5), to which the wastewater flows after the aforementioned chambers (2, 3, 4), the well chamber (5) being arranged inside the wastewater well, **characterized in that** the uppermost part of the well chamber (5) is narrower than the lower part.

10. A wastewater well as claimed in claim 9, **characterized in that** the well chamber (5) is arranged in the middle of the wastewater well.

11. A wastewater well as claimed in claim 9 or 10, **characterized in that** the wastewater well comprises only one manhole (17), through which all the chambers (2, 3, 4, 5) of the depositing tank are serviceable.

12. A wastewater well as claimed in any one of claims 9 to 11, **characterized in that** the lower part of the well chamber (5) is arranged to comprise side projections (5a, 5b).

13. A wastewater well as claimed in claim 12, **characterized in that** the side projections (5a, 5b) are dimensioned and arranged such that the bottom of each chamber (2, 3, 4, 5) is reachable substantially rectilinearly from said manhole (17).

14. A wastewater well as claimed in claim 12 or 13, **characterized in that** the side projections (5a, 5b) are arranged in the middle of the well chamber (5) and a lower recess (5c) is arranged in the lower part of the well chamber (5).

15. A wastewater well as claimed in any one of claims 9 to 14, **characterized in that** the wastewater well is a depositing tank (1).
